Europäisches Patentamt

European Patent Office

Office européen des brevets

(11) Veröffentlichungsnummer: **0 176 003 B1**

(19)

(12) **EUROPÄISCHE PATENTSCHRIFT**

(45) Veröffentlichungstag der Patentschrift: **19.06.91**

(21) Anmeldenummer: **85111481.9**

(22) Anmeldetag: **11.09.85**

(51) Int. Cl.5: **A45D 20/30, F26B 25/22, G05D 22/02**

(54) Verfahren zur Messung und Regelung des Feuchtigkeitsgehalts des Haares.

(30) Priorität: **11.09.84 DE 3433246**

(43) Veröffentlichungstag der Anmeldung:
**02.04.86 Patentblatt 86/14**

(45) Bekanntmachung des Hinweises auf die
Patenterteilung:
**19.06.91 Patentblatt 91/25**

(84) Benannte Vertragsstaaten:
**AT BE CH DE FR GB IT LI LU NL SE**

(56) Entgegenhaltungen:
**EP-A- 0 073 944      EP-A- 0 074 108**
**CH-A- 569 943        DE-A- 3 112 384**
**DE-B- 1 079 801      FR-A- 2 424 352**
**US-A- 3 304 621      US-A- 3 327 403**

(73) Patentinhaber: **Wella Aktiengesellschaft**
**Berliner Allee 65**
**W-6100 Darmstadt(DE)**

(72) Erfinder: **Bollinger, Heribert**
**Hölchenstrasse 31**
**W-6520 Worms 26(DE)**
Erfinder: **Hollmann, Siegfried**
**Carl-Ulrich-Strasse 48**
**W-6100 Darmstadt(DE)**
Erfinder: **Mattinger, Detlef**
**Athanasius-Kircher-Strasse 6**
**W-6418 Hünfeld(DE)**

## Beschreibung

Die Erfindung bezieht sich auf ein Verfahren zur Messung und Regelung des Feuchtigkeitsgehalts des Haares unter Verwendung einer Haartrokkenhaube mit einem Luftfeuchtigkeitssensor im Rückluftkanal.

Aus der EP OS 0 073 944 ist ein Trocknungsverfahren bekannt, bei dem mittels eines im Rückluftkanal angeordneten Luftfeuchtigkeitssensors in Abhängigkeit von der gemessenen relativen Luftfeuchtigkeit selbsttätig die Heizleistung geregelt wird. Von Nachteil hierbei ist, daß der Feuchtigkeitszustand des Haares nicht ins Verhältnis zur relativen Außenluftfeuchtigkeit gesetzt ist, womit ein solches Verfahren höchst ungenau ist und zu einer Übertrocknung führen kann. Abhilfe soll dabei ein zweiter Luftfeuchtigkeitssensor schaffen, der die relative Außenluftfeuchtigkeit mit in das Trocknungsverfahren einbezieht. Nachteilig ist dabei immer noch eine große Meßungenauigkeit, da man davon ausgehen muß, daß eine vergleichende relative Luftfeuchtigkeitsmessung nur dann möglich ist, wenn die Temperaturen der Rückluft und Außenluft gleich sind, sowie durch die Verwendung von zwei Sensoren mit nicht identischen Kennlinien. Eine Verbesserung der Meßgenauigkeit ist durch ein ausgesuchtes (teures) Pärchen (weitgehende Übereinstimmung der Kennlinien) möglich, verteuert aber auch das Gerät für die Durchführung des Verfahrens durch einen hohen Schaltungsaufwand.

Die DE AS 10 79 801 offenbart ein Trocknungsverfahren mit zwei Luftfeuchtigkeitssensoren, wobei die relative Luftfeuchtigkeit der Rückluft und der Außenluft erfaßt wird, wobei die Rücklufttemperatur durch Kühlrippen und Beaufschlagung von Außenluft angeblich auf die Außenlufttemperatur gebracht wird zwecks vergleichender Messung der relativen Luftfeuchtigkeit bei gleichen Temperaturen. Durch die hohe Rückluftströmung ist eine Angleichung an die Außenlufttemperatur nicht möglich. Im übrigen gelten die bereits genannten Nachteile.

Aufgabe der Erfindung ist es, ein Verfahren zum Trocknen des menschlichen Haares zu schaffen, das die Nachteile nicht aufweist, bzw. eine genauere Messung und Regelung des Feuchtigkeitsgehalts des Haares ermöglicht und ein Übertrocknen verhindert.

Diese Aufgabe wird durch den kennzeichnenden Teil des Anspruchs 1 gelöst.

Ausgehend von dem Gedanken, daß das Haar dann als trocken anzusehen ist, wenn der Luftfeuchtigkeitsgehalt der Abluft kaum mehr sich ändert, läßt sich dieser Zustand durch die erfindungsgemäße Lösung feststellen und damit auch die Beendigung des Trocknungsvorganges.

Zwecks Anpassung des behandelten Haares an die Temperatur und Luftfeuchtigkeit der Umgebung und um die überschüssige Restfeuchtigkeit des Haares zu vermindern, ohne daß das Haar übertrocknet wird, läuft nach Erreichen eines vorgegebenen Differenzwertes (z.B. 0,1) der gemessenen Luftfeuchtigkeitsmittelwerte der Trocknungsvorgang unter verminderter Heizleistung und gegebenenfalls unter verminderter Frischluftleistung bis zum Ablauf einer vorgegebenen Zeit (z.B. 5 Min.) weiter.

Für die Signalisierung einer Vorankündigung für die Beendigung des Trocknungsvorganges kann vorteilhaft das Stoppsignal genutzt werden, das nach einer vorgegebenen Zeit und nach einer vorgegebenen Zeit der verminderten Trocknungsphase (Verminderung der Heizleistung/Frischluftstrom) darüberhinaus noch die Restzeit mittels eines Timer bis zum Abschalten der Trockenhaube zur Anzeige bringt. Durch diese Einrichtung kann das Bedienungspersonal sich optimal auf den Bedienungsablauf einrichten.

Da die Empfindlichkeit von Luftfeuchtigkeitssensoren besonders hoch im Bereich höherer Luftfeuchtigkeit ist, läßt sich meßtechnisch die über eine Wärmetauscherkammer abgekühlte Rückluft besser erfassen, da dadurch die relative Luftfeuchtigkeit steigt.

Vorteilhaft ist es auch, wenn die mit Kühlrippen versehene Wärmetauschkammer im Frischluftstrom des Ventilators angeordnet ist.

Die hohlringförmig ausgestaltete Mischkammer bietet hierdurch eine gute Durchmischung der Rückluft und eine gute bauliche Anpassung zum Frischluftventilator bzw. Trockenhaubeninnenraum.

Ebenso bietet die hohlringförmig ausgestaltete Wärmetauschkammer eine gute bauliche Anpassung und gute Umspülung mit Frischluft vom Ventilatorgebläse her.

Das Absaugen der Rückluft über die Rückluftkanäle kann über einen separaten Ventilator erfolgen oder aber auch durch einen Frischluftventilator, wobei der Unterdruck für das Absaugen genutzt wird.

Unter Einbeziehung einer Haartrocknungsprogrammeinrichtung ist ein individuelles Trocknen möglich, so kann beispielsweise bei voller Heizleistung in der Anfangsphase der Trocknung die Leistung nach einer vorgegebenen Charakteristik, unter Kontrolle über einen Temperatursensor, abgesenkt werden; ein dazu entsprechend abgestimmtes Absenken des Frischluftstromes führt zu einem das Haar schonenden Trocknungsvorgang und wird von der dem Trocknungsvorgang ausgesetzten Person als angenehm empfunden.

Ein weiterer Vorteil der Erfindung ist darin zu sehen, daß Luftfeuchtigkeitssensoren eingesetzt werden können, die keine ausgeprägte Linearität der Kennlinie aufweisen müssen wegen der Differenzmessung und dadurch kostengünstige Sensoren eingesetzt werden können.

Anhand des dargestellten Ausführungsbeispiels wird die Erfindung näher erläutert.

Es zeigt:

Fig. 1 einen Trocknungskurvenverlauf mit Darstellung der Meßintervalle,

Fig. 2 ein Blockdiagramm für das erfindungsgemäße Verfahren.

Fig. 3 einen Axialschnitt durch eine Trockenhaube,

Fig. 4 einen Schnitt A - A durch die Mischkammer,

Fig. 5 einen Schnitt B - B durch die Wärmetauscherkammer,

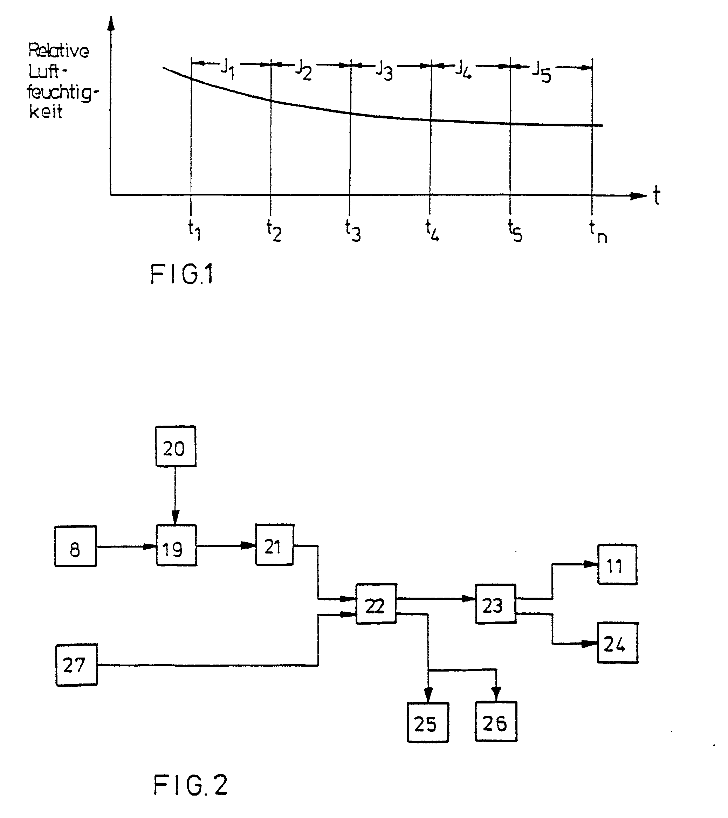

Fig. 1 zeigt ein Diagramm der Meßintervalle. Bewährt haben sich 6 gleiche Messungen pro Meßintervallzeit (J) von $t = 2$ Minuten. Aus diesen ersten sechs Meßwerten im Meßintervall $J_1$ wird der Mittelwert gebildet und gespeichert. Dann wird aus weiteren 6 Messungen der Mittelwert aus Meßintervall $J_2$ gebildet und gespeichert. Nun wird vom Mittelwert aus Intervall $J_1$ der Mittelwert vom Intervall $J_2$ substrahiert. Ist die Differenz aus beiden Mittelwerten z.B. kleiner als $\pm 0,1$. so wird ein erstes Stoppsignal erzeugt.

Aus dem Intervall $J_3$ wird ein weiterer Mittelwert gebildet. Ergibt die Subtraktion der Mittelwerte von den Intervallen $J_2$ und $J_3$ eine Differenz von wiederum z.B. kleiner $+ 0,1$, so wird das laufende Automatikprogramm durch ein zweites Stoppsignal gestoppt und auf ein Festzeitprogramm vom z.B. 5 Minuten Zeitdauer umgeschaltet. Durch diese Maßnahme wird vermieden, daß für den Fall von Fehlmessungen das laufende Automatikprogramm gestoppt wird. Ein erstes Stoppsignal muß also durch ein unmittelbar nachfolgendes zweites Stoppsignal bestätigt werden, z.B. $(J_1 - J_2)$ kleiner als $+ 0,1$ und $(J_2 - J_3)$ kleiner als $+ 0,1$.

Findet das erste Stoppsignal keine unmittelbare nachfolgende Bestätigung durch eine unmittelbare nachfolgende Differenzmessung, ist der Differenzwert z.B. größer als $\pm 0,1$, so laufen die Intervallmessungen und das Automatikprogramm weiter. Sollte ein vorgegebener Differenzwert nicht erreicht werden innerhalb einer Gesamttrockenzeit, von z.B. 60 Minuten, so schaltet die Trockenhaube automatisch ab.

Das in Fig. 2 dargestellte Blockdiagramm veranschaulicht zusätzlich das erfindungsgemäße Meßverfahren. Die Mittelwertmeßeinrichtung 19 erfaßt in gleichen Meßintervallen ($J_1$ ... $J_n$), zeitlich gesteuert von einem Zeittaktgeber 20, die Luftfeuchtigkeitsmeßwerte des Luftfeuchtigkeitssensors 8. Nach Ablauf eines jeden Meßintervalls ($J_1$ ... $J_n$), getaktet von dem Zeittaktgeber 20, wird der Mittelwert in die Differenzwertmeßeinrichtung 21 gegeben und dort gespeichert, wobei dann ein erstes Stoppsignal erzeugt wird, wenn eine vorgegebene Differenz hintereinanderfolgender Mittelwerte erreicht ist. Die Differenzwertbildung wird jeweils durch Eingang eines neuen Mittelwerts aktiviert. Erst ein zweites hintereinanderliegendes Stoppsignal wird der Haartrocknungsprogrammeinrichtung 22 zugeführt, wobei diese bei Automatikbetrieb der Haartrockenhaube 1 nach Ablauf einer vorgegebenen Festzeit über die Haartrocknungssteuerungseinrichtung 23 die Heizung 24 und den Ventilatormotor 11 unter verminderter Leistung weiterarbeiten läßt. Vorteilhaft kann vorgesehen werden, daß das zweite hintereinanderliegende Stoppsignal eine optische bzw. akustische Vorankündigungsanzeige 25 des bald zu erwartenden Trocknungsvorgangendes bewirkt, gegebenenfalls unter zeitlicher Verzögerung. Parallel dazu kann damit eine Restzeitanzeige 26 der vorgegebenen Festzeit vorgesehen werden, wobei bei Erreichen der Restzeit "0" die Trockenhaube 1 ausgeschaltet wird.

Durch einen mit der Haartrocknungsprogrammeinrichtung 22 verbundenen Temperatursensor 27 kann die Temperatur der Abluft 3 kontrolliert bzw. geregelt werden.

Weiterhin kann die Haartrocknungsprogrammeinrichtung 22 für vorgegebene Parameter (z.B. Zeit, Temperatur, Ventilatormotordrehzahl) im Nichtautomatikprogrammbereich umschaltbar eingerichtet werden.

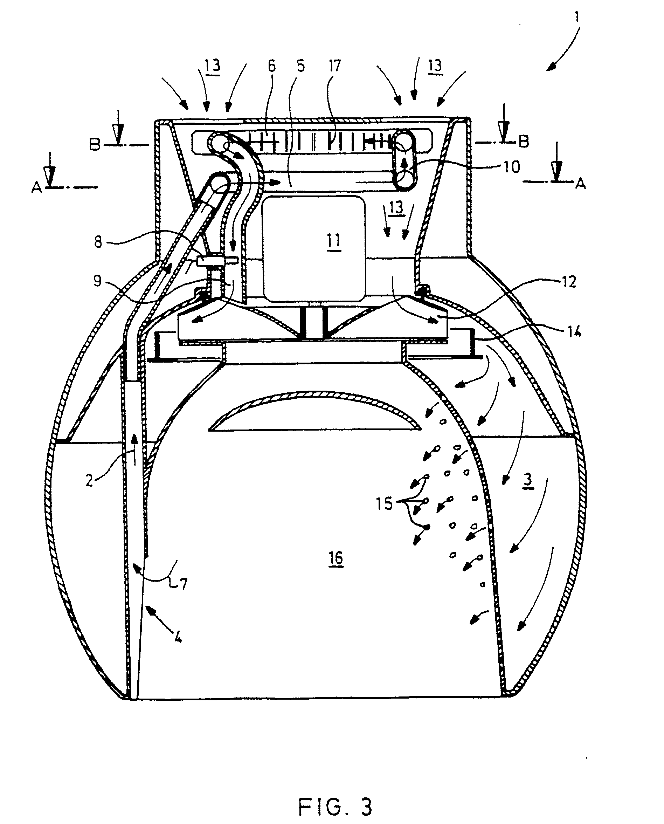

Die in Fig. 3 im Axialschnitt dargestellte Trockenhaube 1 mit Luftumwälzung weist mindestens zwei Rückluftkanäle 2 auf, die die das Haar umspülende trocknende Abluft 3 über eine oder mehrere Öffnungen 4 im Bereich der unteren Haarpartien zum Teil aufnehmen und über eine Mischkammer 5 und eine Wärmetauscherkammer 6 in den Frischluftstrom rückgeführt wird. Die durch die Mischkammer 5 und Wärmetauscherkammer 6 fließende Rückluft 7 beaufschlagt einen Luftfeuchtigkeitssensor 8 in einem daran anschließenden Rückluftansaugkanal 9. Der Ausgang der Mischkammer 5 und der Eingang der Wärmetauscherkammer 6 ist durch einen Verbindungskanal 10 verbunden. Das von einem Ventilatormotor 11 angetriebene Ventilatorflügelrad 12 treibt die Frischluft 13 und die am Rückluftansaugkanal 9 heraustretende Rückluft 7 zum Aufwärmen über den Heizkörper 14 und tritt durch die Abluftaustrittsöffnungen 15 in den Trocknungsraum 16.

Für einen besseren Wärmeaustausch sind an der Wärmetauscherkammer 6 Kühlrippen 17 derart angeordnet, daß eine optimale Frischluftumspülung gewährleistet ist, wobei die Kühlrippen ganz oder teilweise den Hohlrohrumfang der Wärmetauscherkammer 6 umfassen.

Unter einem geringen Abstand zum Ventilatorflügelrad 12 ist die Austrittsöffnung des Rückluftausgangskanales 9 angeordnet, wobei das sich drehende Ventilatorflügelrad 12 an der Austrittsöffnung einen Unter-druck erzeugt, der den Rückluftstrom durch die Rückluftkanäle 2, Mischkammer 5, Verbindungskanal 10, Wärmetauscherkammer 6 und Rückluftausgangskanal 9 bewirkt.

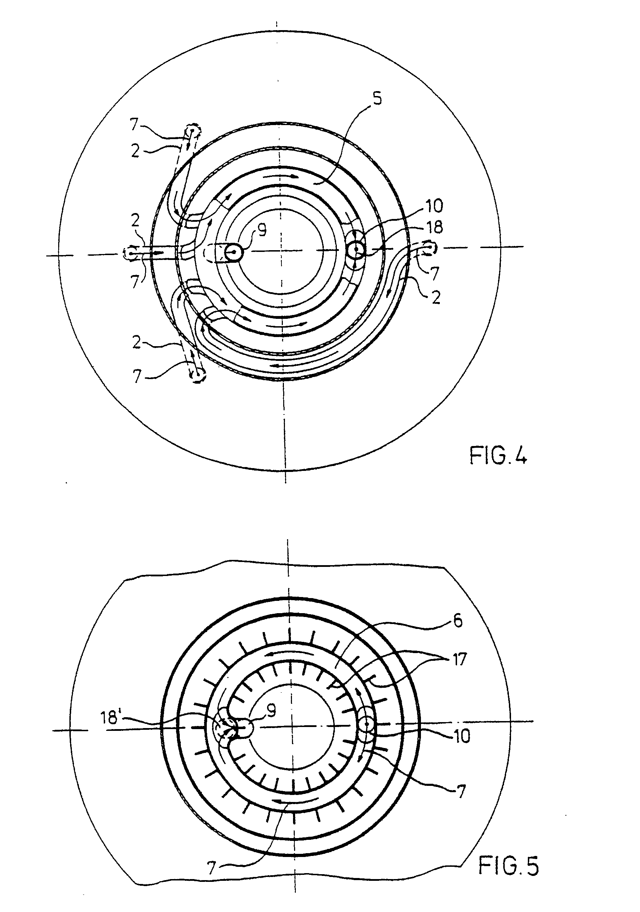

Fig. 4 zeigt den Schnitt A - A (Fig. 3 ) durch die hohlringförmige Mischkammer 5. In dem hier dargestellten, bevorzugten Ausführungsbeispiel münden gesammelt die vier Rückluftkanäle 2 in die Mischkammer 5, wobei die Rückluft 7 von jeweils zwei Rückluftkanälen 2 jeweils in einer Mischkammerhälfte durchmischt wird und durch die gegenüberliegende Austrittsöffnung 18 in den Verbindungskanal 18 fließt. Durch diese Anordnung wird erreicht, daß die Weglänge der durchmischten Rückluft 7 in der Mischkammer 5 annähernd gleich ist und das Meßergebnis weniger verfälscht.

Den Schnitt B - B (Fig. 3 ) durch die hohlringförmige Wärmetauscherkammer 6 zeigt Fig. 5 . Die durch den Verbindungskanal 10 in die Wärmetauscherkammer 6 geführte Rückluft 7 teilt sich in zwei Teilströme, die jeweil's eine Wärmetauscherkammerhälfte durchfließen und an der gegenüberliegenden Seite in den Rückluftausgangskanal 9 hineinfließen. Zum Zwecke eines erhöhten Wärmeaustausches sind um die Wärmetauscherkammer 6 herum Kühlrippen 17 angeordnet.

## Ansprüche

1. Verfahren zur Messung und Regelung des Feuchtigkeitsgehalts des Haares unter Verwendung einer Haartrockenhaube mit einem.Luftfeuchtigkeitssensor im Rückluftkanal, **dadurch gekennzeichnet,** daß mit Beginn der Trocknungsphase eine mit dem Luftfeuchtigkeitssensor (8) verbundene Meßeinrichtung (19) in gleichbleibenden Meßintervallen Mittelwerte bildet, wobei zwecks Einleitung einer Automatikprogrammbeendigung ein erstes Stoppsignal von der Meßeinrichtung (19) in eine Haartrocknungsprogrammeinrichtung (22) gegeben wird, wenn ein vorgegebener Differenzwert der gemessenen Luftfeuchtigkeitsmittelwerte unterschritten wird.

2. Verfahren nach Anspruch 1, **dadurch gekennzeichnet,** daß durch ein unmittelbar nachfolgendes zweites Stoppsignal die Haartrocknungsprogrammeinrichtung (22) vom Automatikprogramm auf ein vorgegebenes Festzeitprogramm umschaltet.

3. Verfahren nach den Ansprüchen 1 und 2, **dadurch gekennzeichnet,** daß nach Ablauf des Festzeitprogramms die Haartrockenhaube (1) unter Verminderung der Heizleistung und der Drehzahl des Frischluftventilators (11) bis zur manuellen Abschaltung weiterarbeitet.

4. Verfahren nach den Ansprüchen 1 bis 3, **dadurch gekennzeichnet,** daß der Ablauf des Festzeitprogramms optisch und/oder akustisch angezeigt wird.

5. Verfahren nach den Ansprüchen 1 bis 4, **dadurch gekennzeichnet,** daß das Stoppsignal, eine Restzeitanzeige (26) bis zum Trocknungsende bewirkt.

6. Haartrockenhaube fur Durchführung des Verfahrens nach den Ansprüchen 1 bis 5, **dadurch gekennzeichnet,** daß die Haartrockenhaube (1) mindestens zwei, vorzugsweise vier in eine Mischkammer (5) mündende Rückluftkanäle (2) aufweist, wobei ein Luftfeuchtigkeitssensor (8) von der gemischten Rückluft (7) beaufschlagt wird.

7. Haartrockenhaube nach Anspruch 6, **dadurch gekennzeichnet,** daß eine Austrittsöffnung (18) der Mischkammer (5) durch einen Kanal (10) mit einer Wärmetauschkammer (6) verbunden ist, wobei der Luftfeuchtigkeitssensor (8) von der gemischten, abgekühlten Rückluft (7) beaufschlagt wird.

8. Haartrockenhaube nach den Ansprüchen 6 und 7, **dadurch gekennzeichnet,** daß die Mischkammer (5) und/oder die Wärmetauschkammer (6) Kühlrippen (17) aufweist und in einem Frischluftstrom (13) angeordnet ist.

9. Haartrockenhaube nach den Ansprüchen 6 bis 8, **dadurch gekennzeichnet,** daß die Mischkammer (5) hohlringförmig ausgebildet ist und auf der gegenüberliegenden Seite der Rücklufteinmündungen die Austrittsöffnung (18) aufweist.

10. Haartrockenhaube nach den Ansprüchen 6 bis 9, **dadurch gekennzeichnet,** daß die Wärmetauscherkammer (6) hohlringförmig ausgebildet ist und auf der gegenüberliegenden Seite der Eintrittsöffnung für die gemischte Rückluft (7) eine Austrittsöffnung (18') angeordnet ist.

11. Haartrockenhaube nach den Ansprüchen 6 bis 10,,**dadurch gekennzeichnet,** daß die Rückluft (7) zugleich von einem Frischluftventilator (11) angesaugt wird.

12. Haartrockenhaube nach den Ansprüchen 6 bis 11, **dadurch gekennzeichnet,** daß der Luftfeuchtigkeitssensor (8) über eine die relative Luftfeuchtigkeit messende Mittelwertmeßeinrichtung (19) mit einer Haartrocknungsprogrammeinrichtung (22) verbunden ist.

**13.** Haartrockenhaube nach den Ansprüchen 6 bis 12, **dadurch gekennzeichnet**, daß die Haartrocknungsprogrammeinrichtung (22) mit einem Temperatursensor (27) verbunden ist.

## Claims

**1.** Method of measuring and regulating the content of moisture in the hair, using a hood hair dryer with an air moisture sensor in the return air duct, characterised in that, when the drying phase begins, a measuring device (19) connected with the air moisture sensor (8) creates mean values in uniform measurement intervals, a first stop signal being transmitted from the measuring device (19) into a hair-drying programme device (22) for the purpose of introducing an automatic programme termination, when the mean values of the measured air moisture fall below a pre-selected difference value.

**2.** Method according to claim 1, characterised in that the hair-drying programme device (22) switches over from the automatic programme to a pre-selected fixed time programme, by an immediately following second stop signal.

**3.** Method according to claims 1 and 2, characterised in that, when the fixed time programme has run its course, the hood hair dryer (1) continues working with reduced heat output and reduced rotational speed of the fresh air ventilator (11) until it is switched off by hand.

**4.** Method according to claims 1 to 3, characterised in that the end of the fixed time programme is indicated optically and/or acoustically.

**5.** Method according to claims 1 to 4, characterised in that the stop signal effects a residual time indication (26) until the end of drying.

**6.** Hood hair dryer for carrying out the method according to claims 1 to 5, characterised in that the hair dryer (1) has at least two, preferably four return air ducts (2) discharging into a mixing chamber (5), the mixed return air (7) being admitted to an air moisture sensor (8).

**7.** Hood hair dryer according to claim 6, characterised in that an outlet opening (18) of the mixing chamber (5) is connected with a heat exchange chamber (6) through a duct (10), the mixed, cooled return air (7) being admitted to the air moisture sensor (8).

**8.** Hood hair dryer according to claims 6 and 7, characterised in that the mixing chamber (5) and/or the heat exchange chamber (6) has cooling fins (17) and is arranged in a fresh air current (13).

**9.** Hood hair dryer according to claims 6 to 8, characterised in that the mixing chamber (5) is designed in a hollow ring shape and has the outlet opening (18) on the opposite side of the return air outlets.

**10.** Hood hair dryer according to claims 6 to 9, characterised in that the heat exchange chamber (6) is designed in a hollow ring shape and an outlet opening (18') is arranged on the opposite side of the inlet opening for the mixed return air (7).

**11.** Hood hair dryer according to claims 6 to 10, characterised in that the return air (7) is at the same time sucked in by a fresh air ventilator (11).

**12.** Hood hair dryer according to claims 6 to 11, characterised in that the air moisture sensor (8) is connected with a hair-drying programme-device (22) via a mean value measuring device (19) which measures the relative air moisture.

**13.** Hood hair dryer according to claims 6 to 12, characterised in that the hair-drying programme device (22) is connected with a temperature sensor (27).

## Revendications

**1.** Procédé de mesure et de régulation de la teneur en humidité des cheveux en utilisant un casque séchecheveux comportant un détecteur hygromètrique dans le canal de retour d'air, caractérisé en ce qu'au début de la phase de séchage, un dispositif de mesure (19) relié au détecteur hyromètrique (8), établit des valeurs moyennes à des intervalles de mesure constants, un premier signal d'arrêt étant transmis, pour déclencher un achèvement de programme automatique, du dispositif de mesure (19) à un dispositif de programmation de séchage des cheveux (22), lorsqu'on descend au-dessous d'une valeur prédéterminée de différence des moyennes hygromètriques mesurées.

**2.** Procédé selon la revendication 1, caractérisé en ce que, sous l'action d'un second signal d'arrêt immédiatement subséquent, le dispositif de programmation de séchage des cheveux (22) commute du programme automatique à un programme à durée fixe prédéterminé.

3. Procédé selon les revendications 1 et 2, caractérisé en ce qu'après le déroulement du programme à durée fixe, le casque sèche-cheveux (1) continue à fonctionner jusqu'à la déconnexion manuelle, avec réduction de la puissance de chauffage et de la vitesse de rotation du ventilateur à air frais (11).

4. Procédé selon les revendications 1 à 3, caractérisé en ce que le déroulement du programme à durée fixe est indiqué optiquement et/ou acoustiquement.

5. Procédé selon les revendications 1 à 4, caractérisé en ce que le signal d'arrêt provoque une indication de temps restant (26) jusqu'à la fin du séchage.

6. Casque sèche-cheveux pour mettre en oeuvre le procédé selon les revendications 1 à 5, caractérisé en ce que le casque sèche-cheveux (1) comporte au moins deux, de préférence quatre canaux de retour d'air (2) débouchant dans une chambre de mélange (5), un détecteur hygromètrique (8) recevant l'air de retour (7) mélangé.

7. Casque sèche-cheveux selon la revendication 6, caractérisé en ce qu'une ouverture de sortie (18) de la chambre de mélange (5) est reliée par un canal (10) à une chambre d'échange de chaleur (6), le détecteur hygromètrique (8) recevant l'air de retour refroidi mélangé (7).

8. Casque sèche-cheveux selon les revendications 6 et 7, caractérisé en ce que la chambre de mélange (5) et/ou la chambre d'échange de chaleur (6) comporte des ailettes de refroidissement (17) et est placée dans un courant d'air frais (13).

9. Casque sèche-cheveux selon les revendications 6 à 8, caractérisé en ce que la chambre de mélange (5) a la conformation d'un anneau creux et comporte l'ouverture de sortie (18) du côté opposé aux embouchures d'air de retour.

10. Casque sèche-cheveux selon les revendications 6 à 9, caractérisé en ce que la chambre d'échange de chaleur (6) a une conformation d'anneau creux et, en ce qu'une ouverture de sortie (18') est placée du côté opposé à l'ouverture d'entrée de l'air de retour mélangé (7).

11. Casque sèche-cheveux selon les revendications 6 à 10, caractérisé en ce que l'air de retour (7) est aspiré en même temps par un ventilateur d'air frais (11).

12. Casque sèche-cheveux selon les revendications 6 à 11, caractérisé en ce que le détecteur hygromètrique (8) est relié à un dispositif de programmation de séchage des cheveux (22) par l'intermédiaire d'un dispositif de mesure de valeurs moyennes mesurant l'humidité relative de l'air.

13. Casque sèche-cheveux selon les revendications 6 à 12, caractérisé en ce que le dispositif de programmation de séchage des cheveux (22) est relié à un capteur de température (27).

FIG.1

FIG.2

FIG. 3

FIG.4

FIG.5